# EUROPÄISCHE PATENTSCHRIFT

(11) **EP 0 692 648 B1**
(45) Veröffentlichungstag und Bekanntmachung des Hinweises auf die Patenterteilung: **24.05.2000**
(21) Anmeldenummer: 95810431.7
(22) Anmeldetag: 27.06.1995
(51) Int. Cl.: F16C 33/34, F01D 25/16

(54) **Lagerung eines Abgasturboladers**
Rollerbearing for a turbocharger
Palier à rouleaux pour turbosoufflante

(30) Priorität: 13.07.1994 DE 4424640
(43) Veröffentlichungstag der Anmeldung: 17.01.1996
(73) Patentinhaber: ASEA BROWN BOVERI AG, 5400 Baden (CH)
(72) Erfinder: Kreiselmeier, Gerhard, D-97456 Dittelbrunn (DE); Loos, Markus, CH-5412 Gebenstorf (CH); Sebald, Wilhelm, D-97209 Veitshöchheim (DE); Wohlrab, Raimund, CH-5400 Baden (CH)

(56) Entgegenhaltungen:
- EP-A- 0 414 144
- EP-A- 0 523 500
- DE-B- 1 077 007
- GB-A- 1 287 680

## Beschreibung

### Technisches Gebiet

Die Erfindung betrifft ein Zylinderrollenlager für die turbinenseitige Lagerung eines Abgasturboladers gemäß den Oberbegriff des Anspruchs 1, also ein Sonderlager.

### Stand der Technik

Bei immer zunehmenden Ansprüchen an die Turbolader müssen - um mit der Betriebssicherheit Schritt halten zu können - auch an deren Wälzlager immer höhere Anforderungen gestellt werden. Trotz der ständig steigenden Drehzahlen und Belastungen besteht unverändert die Forderung nach hoher Lebensdauer. Alle Einwirkungen, die einen hohen Verschleiss oder eine schnelle Ermüdung vermuten lassen, müssen untersucht werden, damit Konstruktion, Einbau, Schmierung und Kühlung der Wälzlager zweckmässig ausgeführt werden können.

Die ölgeschmierten Wälzlager von Abgasturboladern sind Sonderlager, die für die speziellen Betriebsbedingungen ausgelegt sind. Sie sind elastisch in Dämpfungsblechpakete in die Gehäuse eingebettet. Diese Federpakete rund um die Lager sind von besonderer Wichtigkeit, da sie beim im Betrieb entstehenden Unwuchten die Rotorausschläge dämpfen.

Auf der Turbinenseite des Abgasturboladers ist es bekannt, herkömmliche Zylinderrollenlager mit genieteten oder einteiligen Messingkäfigen zu verwenden. Infolge der generell zunehmenden Leistungssteigerung der Abgasturbolader ist es vermehrt zu Käfigbrüchen und Lagerhavarien gekommen. Ursache der Havarien sind zu hohe dynamische Käfigbeanspruchungen, die infolge der hohen Drehzahlen hauptsächlich durch die Masse der Rollen und des Käfigs bestimmt werden. Die hohen dynamischen Käfigbeanspruchungen belasten den Käfig selbst, vornehmlich die Käfigstege in Umfangsrichtung. Erhöhte Beanspruchungen ergeben sich aber auch für die Käfigführung, die bei einer an der Grenze liegenden Schmierung zum Anfressen neigen kann.

Ein Lager der eingangs genannten Art ist aus DE-A-1 077 007 bekannt.

Aus der Europäischen Patentanmeldung EP-A-523 500 ist ein Zylinderrollenlager bekannt, das keiner Käfig aufweist; das Verhältnis Zylinderrollendurchmesser zum Lagerteilkreisdurchmesser ist kleiner als 0,2.

Aus der GB-A-1 287 680 ist ferner ein Wälzlager bekannt, dessen zylindrische Mollen als Nadeler ausgestaltet sind. Voraussetzungsgemäß ergibt sich ein kleines Verhältnis von Zylinderrollendurchmesser zu Lagesteilkreisdurchmesser. Das Lager weist einen Stahlkäfig auf.

### Darstellung der Erfindung

Der Erfindung liegt die Aufgabe zugrunde, bei einer Lagerung der eingangs genannten Art die dynamischen Käfigbeanspruchungen zu reduzieren, und diese Sonderlager weiter zu verbessern.

Erfindungsgemäss wird dies durch die Kombination der Merkmale des Kennzeichnungsteils des Anspruchs 1 erreicht.

Die Vorteile der Erfindung sind unter anderem in der geringen Masse der nunmehr relativ kleinen Wälzkörper zu sehen. Diese relativ kleinen Wälzkörper erlauben wiederum eine leichtere Käfigkonstruktion.

Es ist erfindungsgemäß zweckmässig, dass das Zylinderrollenlager mit einem beschichteten Stahlkäfig versehen ist, der auf den Borden des Lagerinnenringes geführt ist. Diese Materialwahl anstelle des bisherigen Messings erlaubt eine weitere Gewichtsreduktion. Zudem lässt sich ein Stahlkäfig auch aufgrund der höheren Werkstofffestigkeit mit geringeren Gewicht konzipieren.

Es ist sinnvoll, dass der Käfig erfindungsgemäß an einer Seite mit einer axialen Verlängerung mit einem ringförmigen Ansatz versehen ist, sodass an dieser Seite ein Pumpgehäuse mit Einspritzkanal für das Lagerschmiermittel vorgesehenen werden kann, wobei der Einspritzkanal dann radial unterhalb des ringförmigen Ansatz in den Lagerraum mündet. Dies hat den Vorteil, dass das eingespritzte Öl durch die Fliehkraft nicht radial auswärts gelenkt wird, sondern unmittelbar an die zu schmierende Käfigführung gelangt. Zudem entsteht zwischen Innenring und Käfig eine Art hydraulische Kupplung, die sich positiv auf den Käfigschlupf auswirkt, da der Käfig durch den sich schneller drehenden Innenring mitgenommen wird.

### Kurze Beschreibung der Zeichnung

In der Zeichnung ist ein Ausführungsbeispiel der Erfindung anhand eines aussengelagerten Abgasturboladers dargestellt.
Es zeigen:
- Fig. 1: einen Teillängsschnitt der Turbinenseite;
- Fig. 2: den Lagereinbau gemäss der Erfindung

Es sind nur die für das Verständnis der Erfindung wesentlichen Elemente mit Bezugszeichen versehen.

### Weg zur Ausführung der Erfindung

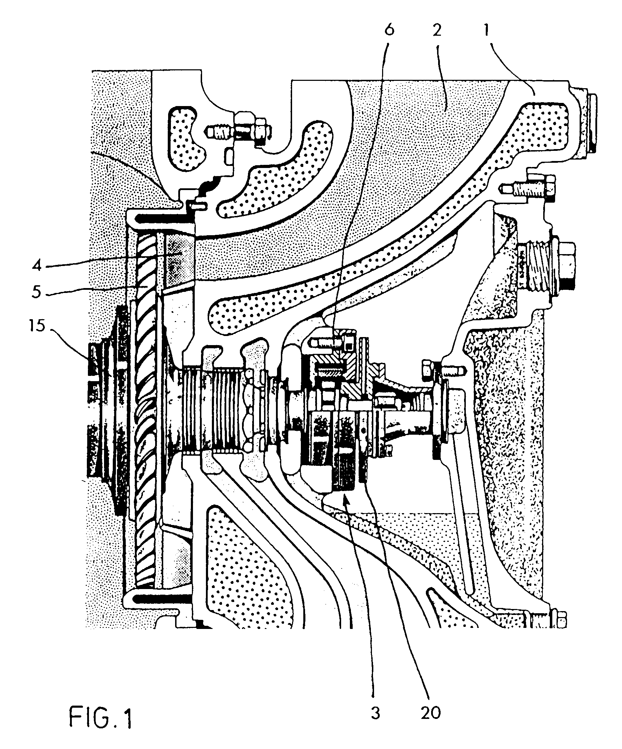

In Fig. 1 ist das Turbinengehäuse 1 mit Gaskanal 2 und der axial durchströmten Turbinenbeschaufelung gezeigt. Diese Beschaufelung besteht einerseits aus den im Gehäuse befestigten Leitschaufeln 4 und den in der Turboladerwelle 15 befestigten Laufschaufeln 5. Der Lagereinbau um die Turboladerwelle 15 ist generell mit 3 bezeichnet. Er ist im Gehäuse 1 mittels Verschraubungen 6 befestigt. An seiner der Turbine abgekehrten Seite ist am Lagereinbau ein Pumpgehäuse 20 angeordnet. Dieses kann beispielsweise eine an sich bekannte selbstansaugende Zentrifugalpumpe für das Schmiermittel, in diesem Falle Öl, enthalten.

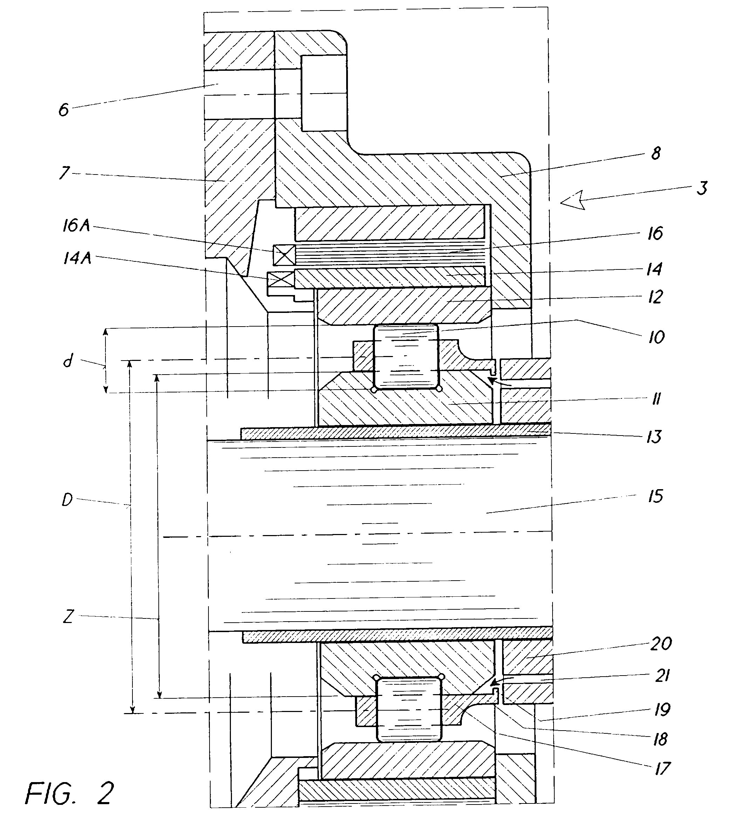

Im Teillängsschnitt nach Fig. 2 ist der turbinenseitige Lagereinbau dargestellt. Im vorliegenden Fall wird angenommen, dass ein bestehender Abgasturbolader mit neuer Lagerung ausgerüstet wird, wozu bis auf das Lager selbst alle bisherigen Teile des Lagereinbaus beibehalten werden. Bei den beizubehaltenden Teilen handelt es sich somit um die innere Lagerbüchse 13, die äussere Lagerbüchse 14, das Blechpaket 16, dem inneren Lagerflansch 7 und den äusseren Lagerflansch 8, welche miteinander mittels angedeuteter Verschraubungen 6 verbunden sind. Nicht gezeigt ist die Befestigung der Flansche am Turbinengehäuse. Das Blechpaket besteht aus mehreren geschlitzten, ineinandergeschachtelten, zylindrischen Blechringen, welche im Ringspalt zwischen äusserer Lagerbüchse 14 und innerem Lagerflansch 7 eingelegt sind. Zur Verdrehsicherung sind die einzelnen Bleche sowie die auf den Aussenring 12 des Lagers aufgepresste äussere Lagerbüchse 14 an mindestens einer Seite mit vorstehenden Nocken 16A respektiv 14A versehen. Diese Nocken greifen in entsprechende Ausparungen des inneren Lagerflansches 7 ein.

Das eigentliche Zylinderrollenlager 10 ist mit seinem Innenring 11 über die innere Lagerbüchse 13 mit der Turboladerwelle 15 verbunden. Der Aussenring 12 des Lagers ist über die äussere Lagerbüchse 14 in dem weichen Blechpaket 16 abgestützt. Bei den Wälzkörpern handelt es sich um symmetrische Rollen, deren seitliche Führung durch Spielführung zwischen den seitlichen Borden des Innenringes 11 erfolgt.

Gemäss der Erfindung ist das Verhältnis vom Durchmesser d der Zylinderrollen zum Teilkreisdurchmessers D des Lagers kleiner 0,2. Im vorliegenden Fall führt dies zu relativ kleinen Wälzkörpern und aufgrund der geltenden Dimensionen der verbleibenden Teile 13 und 14 zu relativ grossen Lagerinnenringen und Lageraussenringen. Es versteht sich, dass im Fall von neu zu konzipierenden Maschinen den kleinen Wälzkörpern entsprechende Lagerringe vorgesehen werden.

Das Zylinderrollenlager 10 ist mit einem beschichteten Stahlkäfig 17 versehen. Diese Beschichtung verbessert die Notlaufeigenschaften und Verschleisseigenschaften des Gleitkontaktes Käfig-Lagerinnenringbord.

Der Käfig 17 ist auf den Borden des Lagerinnenringes 11 geführt. An der der Turbine abgekehrten Seite ist er mit einer axialen Verlängerung 18 versehen, die in einen ringförmigen Ansatz 19 ausläuft. Dieser ringförmige Ansatz hat die Funktion einer Ölfangnase. Sein Innendurchmesser ist kleiner bemessen als der Käfigführungsdurchmesser Z.

Das Schmieröl für das Lager wird über den Einspritzkanal 21 im Pumpgehäuse 20 geleitet. Der Einspritzkanal 21 mündet radial unterhalb des ringförmigen Ansatzes 19 in den Lagerraum. Hierzu ist der Innendurchmesser des ringförmigen Ansatz grösser bemessen als der Teilkreisdurchmesser des Einspritzkanals. Damit wird sichergestellt, dass das Schmieröl in radialer Richtung gesehen innerhalb des ringförmigen Ansatzes dem Lager zugeführt wird.

### Bezugszeichenliste

- 1: Turbinengehäuse
- 2: Gaskanal
- 3: Lagereinbau
- 4: Leitschaufeln
- 5: Laufschaufeln
- 6: Verschraubungen
- 7: innerer Lagerflansch
- 8: äusserer Lagerflansch
- 10: Zylinderrollenlager
- 11: Innenring
- 12: Aussenring
- 13: innere Lagerbüchse
- 14: äussere Lagerbüchse
- 14A: Nocken
- 15: Turboladerwelle
- 16: Blechpaket
- 16A: Nocken
- 17: Stahlkäfig
- 18: axiale Verlängerung
- 19: ringförmiger Ansatz
- 20: Pumpgehäuse
- 21: Einspritzkanal

- d: Zylinderrollendurchmesser
- D: Lagerteilkreisdurchmesser
- Z: Käfigführungsdurchmesser

## Patentansprüche

1. Zylinderrollenlager (10) für die turbinenseitige Lagerung eines Abgasturboladers, dessen Innenring (11) über eine Lagerbüchse (13) mit der Turboladerwelle (15) verbunden ist und dessen Außenring (12) über eine äußere Lagerbüchse (14) in einem weichen Blechpaket (16) abgestützt ist,
dadurch gekennzeichnet, daß
das Zylinderrollenlager (10) mit einem beschichteten Stahlkäfig (17) versehen ist, der auf den Borden des Lagerinnenringes (11) geführt ist und an mindestens einer Seite eine axiale Verlängerung (18) mit einem ringförmigen Ansatz (19) aufweist und das Verhältnis Zylinderrollendurchmesser (d) zum Lagerteilkreisdurchmesser (D) kleiner 0,2 ist.

2. Zylinderrollenlager (10) nach Anspruch 1,
dadurch gekennzeichnet, dass
an der Seite, an welcher der ringförmige Ansatz (19) angeordnet ist, ein Pumpgehäuse (20) mit Einspritzkanal (21) für das Lagerschmiermittel vorgesehen ist, und dass der Einspritzkanal (21) radial unterhalb des ringförmigen Ansatzes (19) in den Lagerraum mündet.

3. Zylinderrollenlager (10) nach Anspruch 2,
dadurch gekennzeichnet, daß
der Innendurchmesser des ringförmigen Ansatzes (19) größer als der Teilkreisdurchmesser des Einspritzkanals (21) ist.

4. Zylinderrollenlager (10) nach Anspruch 1,
dadurch gekennzeichnet, daß
der Innendurchmesser des ringförmigen Ansatzes (19) kleiner als der Käfigführungsdurchmesser (Z) ist.

## Claims

1. Cylindrical roller bearing (10) for the turbine-side bearing arrangement of an exhaust-gas turbocharger, the inner race (11) of which is connected to the turbocharger shaft (15) via a bearing bush (13) and the outer race (12) of which is supported in a soft sheet-metal stack (16) via an outer bearing bush (14), characterized in that the cylindrical roller bearing (10) is provided with a coated steel cage (17) which is guided on the ribs of the bearing inner race (11) and has on at least one side an axial extension (18) having an annular shoulder (19), and the ratio of cylindrical roller diameter (d) to the bearing pitch circle diameter (D) is less than 0.2.

2. Cylindrical roller bearing (10) according to Claim 1, characterized in that a pump casing (20) having an injection passage (21) for the bearing lubricant is provided on the side on which the annular shoulder (19) is arranged, and in that the injection passage (21) opens radially below the annular shoulder (19) into the bearing space.

3. Cylindrical roller bearing (10) according to Claim 2, characterized in that the inside diameter of the annular shoulder (19) is greater than the pitch circle diameter of the injection passage (21).

4. Cylindrical roller bearing (10) according to Claim 1, characterized in that the inside diameter of the annular shoulder (19) is less than the cage-guide diameter (Z).

## Revendications

1. Palier à rouleaux cylindriques (10) pour le logement, du côté de la turbine, d'une turbosoufflante à gaz d'échappement, dont la bague interne (11) est connectée à l'arbre (15) de la turbosoufflante par le biais d'un coussinet (13), et dont la bague externe (12) est supportée dans un empilage de tôles mou (16) par le biais d'un coussinet externe (14), caractérisé en ce que
le palier à rouleaux cylindriques (10) est pourvu d'une cage en acier revêtue (17), qui est guidée sur les bords de la bague interne de palier (11) et présente sur au moins un côté un prolongement axial (18) avec une saillie annulaire (19) et le rapport entre le diamètre des rouleaux cylindriques (d) et le diamètre du cercle partiel du palier (D) est inférieur à 0,2.

2. Palier à rouleaux cylindriques (10) selon la revendication 1, caractérisé en ce que
du côté où est disposée la saillie annulaire (19), on prévoit un carter de pompe (20) avec un canal d'injection (21) pour le lubrifiant du palier, et en ce que le canal d'injection (21) débouche radialement sous la saillie annulaire (19) dans la chambre du palier.

3. Palier à rouleaux cylindriques (10) selon la revendication 2, caractérisé en ce que
le diamètre intérieur de la saillie annulaire (19) est supérieur au diamètre du cercle partiel du canal d'injection (21).

4. Palier à rouleaux cylindriques (10) selon la revendication 1, caractérisé en ce que le diamètre intérieur de la saillie annulaire (19) est plus petit que le diamètre du guidage de la cage (Z).
